# EUROPEAN PATENT SPECIFICATION

(11) **EP 3 409 533 B1**
(45) Date of publication and mention of the grant of the patent: **30.09.2020**
(21) Application number: 18174511.8
(22) Date of filing: 28.05.2018
(51) Int. Cl.: B60N 2/28

(54) **BASE FOR A CHILD CAR SEAT**
BASIS FÜR EIN KFZ-KINDERSITZ
BASE POUR UN SIÈGE ENFANT DE VÉHICULE

(30) Priority: 29.05.2017 IT 201700058221
(43) Date of publication of application: 05.12.2018
(73) Proprietor: Artsana S.p.A., 22070 Grandate (CO) (IT)
(72) Inventor: DAMIANI, Osvaldo, 24035 Curno (IT); MARTINAZZOLI, Corrado, 22100 Como (IT)
(74) Representative: Perani & Partners S.p.A.

(56) References cited:
- WO-A1-2004/041587
- WO-A2-2005/053999
- US-A- 4 913 490
- US-B1- 9 150 126

## Description

The present invention relates to a base for a child car seat. The seat that comprises the base of the present invention is useful for road safety, as it allows children to be transported in cars in compliance with high safety standards.

Car seats that can be fastened to a rear seat of a car using a safety belt that is already installed on the vehicle are generally known in the prior art. For instance, EP 2 832 587, by the Applicant hereof, relates to a car seat of this type. This patent discloses a child car seat comprising a support adapted to rest on a seat of a vehicle. This support has a base that rests on a seating portion of the seat and a backrest that is arranged to lean against a backrest of the seat.

The base comprises means for coupling and tensioning a safety belt of the car. The backrest comprises means for fastening the belt. The coupling and tensioning means comprise a translating body having one wedge-shaped end adapted to slide within a wedge-shaped cavity situated between two opposed sliding portions of the base. These portions are adapted to move transverse and orthogonal to the translating body when the wedge-shaped end of the latter fits into the wedge-shaped cavity. The safety belt is placed between the cavity and the end. The belt is tensioned when the end is fitted into the cavity and the two portions are accordingly moved apart.

The content of EP 0 822 115 by Britax is also known. This patent discloses a child seat for use in a vehicle having a base member which is adapted to lie on a seat of the vehicle, a seating portion mounted on the base element and guide means which define a path for a strap of safety belt for securing the child seat to the seat of the vehicle. A strap deflecting member is mounted on the base member for alternating between a first position distal from the strap path and a second position in which a strap that follows its path is deflected therefrom, thereby tightening the safety belt.

A similar mechanism is also disclosed in EP 1 110 806, by Combi. This document describes a child seat with a tensioner, whose tensioning system is defined by two supports for a portion of a strap of a safety belt. These supports are placed at the sides of the child seat. The child seat also comprises a lever that is fixed to the base and operates on the strap for tensioning the part disposed between the two supports.

US 9 150 126 by Kitchens et al describes a child car seat provided with an anchor system showing the technical features of the preamble of claim 1.

A problem arises in that all the prior art solutions either have a complex assembly or do not ensure optimum fixation. For example, in the child seat as disclosed by the Combi patent, the strap may slip off the supports if the user is not careful during assembly.

### SUMMARY OF THE INVENTION

In this context, the technical purpose of the present invention is to provide a base for a child car seat that can obviate the aforementioned prior art drawbacks.

Particularly, the present invention has the object to provide a base for a child car seat that can afford a considerably improved stability of the fixation to the seat, as well as being more practical and easily installed.

The aforementioned technical purpose and objects are substantially fulfilled by a base of a child car seat comprising the technical features as disclosed in one or more of the accompanying claims.

Namely, a base for a child car seat of the present invention comprises a main body that is configured to receive a seating portion and a backrest of a child car seat.

The base further comprises a pair of slots. Each slot is placed on a respective side of the main body. The slots define a receptacle therebetween for a safety belt of a vehicle.

The base has at least one abutment surface located between the slots at the receptacle and configured to create friction with the belt when the belt is placed in an interfering condition therewith.

The base also comprises tensioning means integrated in the main body and configured to push the belt against the abutment surface. The tensioning means are adapted to be switched between an idle configuration and a locked configuration.

In the idle configuration, the belt can be inserted between the slots and can slide in the seat on the abutment surface. In the locked configuration, the belt interferes with the abutment surface and is thus locked in the receptacle.

The tensioning means comprise a pair of bars which are configured to be placed transverse to the belt and to make an interference fit with the belt when the tensioning means are in the locked configuration.

Optionally, each slot is defined by a closed loop.

The technical problem is solved, as the base is very easily secured to the seat. The base shall be secured to the seat by simply introducing a fastening ring of a seat belt through both slots, and switching the tensioning means into the locked configuration. This kind of fixation is also much safer than the prior art. Since the fastening ring of the belt is introduced into both slots, the safety belt is very easily guided into the right position, with no possibility of user error. Furthermore, two belt portions are thus disposed in the receptacle in overlapped position and hence, when the bars press the belt against the abutment surface, they also press these belt portions together.

A further advantage is that, if the slots are defined by closed loops, any sub-optimal use of the base will be prevented, as the user cannot pass only one part of the belt through the opening of the ring, but he is forced to fit the fastening ring into the slot as described above, with the two belt portions overlapped in the receptacle.

### LIST OF DRAWINGS

Further features and advantages of the present invention will result more clearly from the illustrative, non-limiting description of a preferred, non-exclusive embodiment of a child car seat as shown in the annexed drawings, in which:
- Figure 1 is a perspective view of a base of a child car seat of the present invention;
- Figure 2 is a sectional front view of the base of Figure 1;
- Figure 3 is a lateral sectional view of the base of Figures 1 and 2, as taken along a plane B-B of Figure 2; and
- Figure 4 is a lateral sectional view of the base of Figures 1 and 2 as taken along a plane A-A of Figure 2.

### DETAILED DESCRIPTION

Referring to the annexed figures, numeral 1 designates a base of a child car seat of the present invention. This base 1 is designed to be secured to the seat of a vehicle, particularly a car, by means of a safety belt 6 that is part of the vehicle. The belt 6 is preferably a three-point belt, and comprises a strap 6a and a fastening ring (not shown) that is adapted to slide on the strap 6a and to be fitted into a buckle (also not shown) that is fixed to the vehicle seat. These safety belts 6 are required by law to be installed on vehicles approved for road transport, such as cars.

The base 1 comprises a main body 2 configured to receive a seating portion and a backrest (not shown) of a child car seat. Namely, the main body 2 comprises a first contact surface 3a, which is designed to rest on a vehicle seat, preferably but without limitation the rear seat of a car. The main body 2 also comprises a second contact surface 3b, which is designed to rest upon a backrest of the seat of a car.

The main body 2 is preferably symmetric, and has two sides 2a, i.e. right and left sides respectively, defining the right and left sides of the child car seat. The main body 2 further comprises a vertical portion 2b which, in operation, has a substantially vertical orientation to stabilize the backrest of the aforementioned child car seat. In addition, the main body comprises a horizontal portion 2c which, in operation, has the purpose of supporting the seating portion of the child car seat. It shall be noted that the first contact surface 3a is defined on the horizontal portion 2c and the second contact surface 3b is defined on the vertical portion 2b.

The base 1 comprises a pair of slots 4. Particularly, each slot 4 is placed on a respective side 2a of the main body 2. More particularly, the slots 4 are arranged in the horizontal portion 2c. The slots 4 define a receptacle 5 therebetween for receiving the above described safety belt 6.

More in detail, each slot 4 is defined by a closed loop, such that the fastening ring must fit into the slot for the strap 6a of the belt 6 to be introduced into the slot 4. Advantageously, when the safety belt 6 is a three-point belt, two portions of the strap 6a will be thus introduced into the slot 4. These portions of the strap 6a are frictionally sliding one on top of the other, thereby affording firmer fixation of the base 1, as more clearly shown hereinbelow.

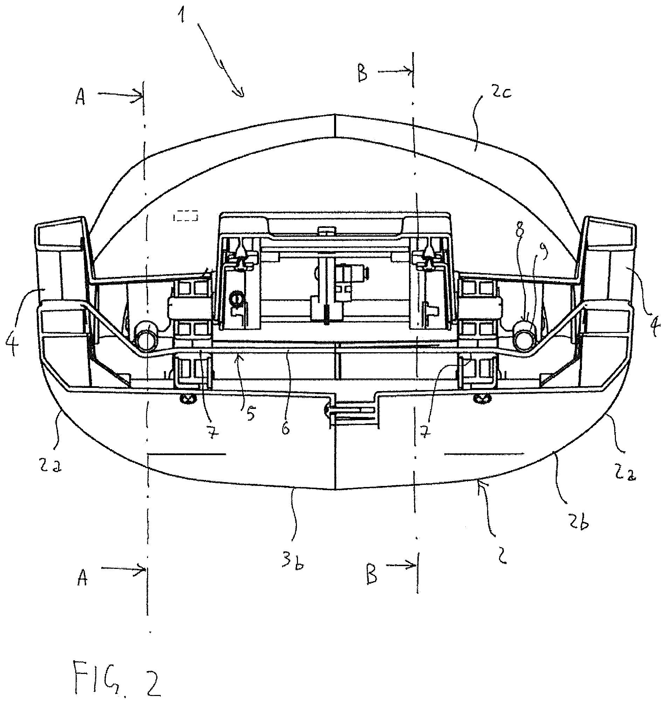

At least one abutment surface 7 is arranged between the slots 4, particularly at the receptacle 5. This abutment surface 7 is configured to create friction with the belt 6, particularly with the strap 6a, when the belt 6 is placed in an interfering condition therewith. Referring to Figure 2, the base comprises a pair of abutment surfaces 7 symmetrically arranged in the receptacle relative to a center plane of the base 1.

The base 1 further comprises tensioning means 8 integrated in the main body 2. These tensioning means 8 are particularly configured to push the belt 6 against the abutment surface 7.

More in detail, the tensioning means 8 are adapted to be switched between an idle configuration and a locked configuration. In the idle configuration, the belt 6 can be inserted between the slots 4, and can slide in the seat 5 particularly on the abutment surface 7. In the locked configuration, the belt 6 interferes with the abutment surface 7 and is thus locked, in the receptacle 5.

The tensioning means 8 particularly comprise a pair of bars 9 configured to be placed transverse to the belt 6 and to make an interference fit with the belt 6 when the tensioning means 8 are in the locked configuration.

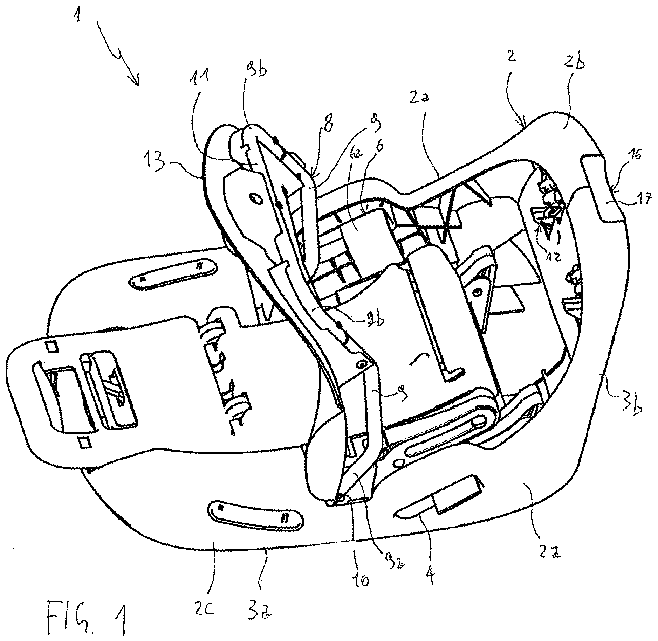

As particularly shown in Figure 1, it shall be noted that each bar 9 has first 9a and second 9b ends. The first end 9a of each bar 9 is connected to the main body 2 at a respective hinge 10. Each bar 9 is adapted to be pivoted relative to the hinge 10 between a distal position and a proximal position. In the distal position the second end 9b is spaced apart from the main body 2. In the proximal position the second end 9b is placed proximate to the main body 2. It shall be noted that the tensioning means 8 are in the idle configuration when the bars 9 are both in the distal position, and are in the locked configuration when the bars 9 are both locked in the proximal position.

In one embodiment of the invention, not shown, the bars 9 are distinct and adapted to move independently of each other. However, in the embodiment as shown in Figure 1, the bars 9, and particularly the second ends 9b, are connected together by a crosspiece 11. The crosspiece 11 is formed of one piece and is integral with both bars 9.

Optionally, the base 1 may comprise a cover member 13 for covering the bars 9 and the crosspiece 11. As particularly shown in Figure 1, the cover member 13 is fixed to the bars 9 and the crosspiece 11 and is hinged to the same hinges 10 with which the bars 9 are connected.

The base 1 further comprises locking/unlocking means 12 operating on the second ends 9b, namely when the bars 9 are in the proximal position, to lock the second ends 9b in the proximal position.

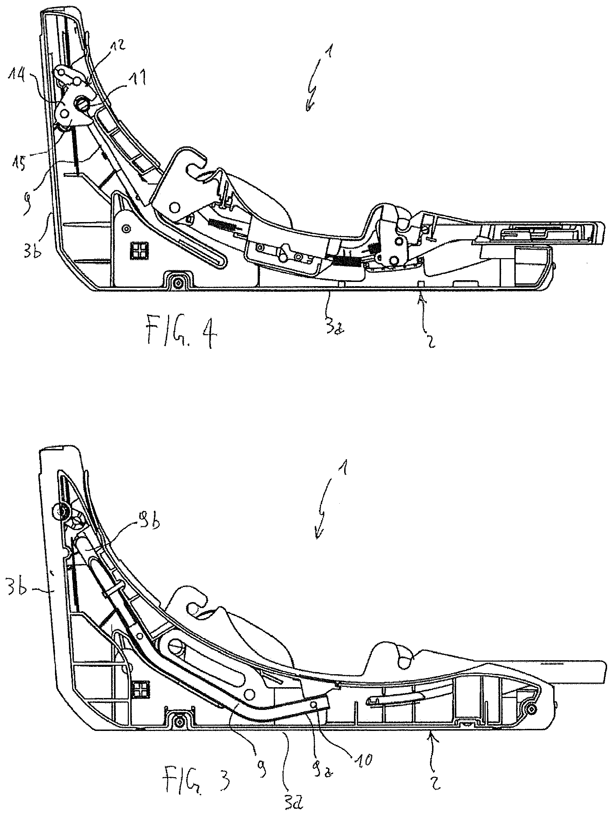

More in detail, the locking/unlocking means 12 comprise an engagement member 14 configured to make an interference fit with the second ends 9b of the bars 9 when the bars 9 are in the proximal position, to lock the bars 9 in the proximal position. Particularly referring to Figure 4, it shall be noted that the engagement member 14, which is defined in this case by a hook 15, is active on the crosspiece 11. Since the crosspiece 11, as mentioned above, is integral with the bars 9, the engagement member 14 may act upon the second ends 9b of the bars 9. Optionally, as shown in Figure 1, the locking/unlocking means 12 may comprise a pair of engagement members 14 in symmetric arrangement with respect to the center plane of the base 1.

The locking/unlocking means 12 further comprise a command member 16, preferably a button 17, which is associated with the engagement member 14. This command member is configured to be actuated by a user to release the second ends 9b of the bars 9 from the engagement member 14. In other words, the button is actuated to cause the rotation of the hook 14 which releases the crosspiece 11 and, as a result, the bars 9.

It shall be noted that, depending on the embodiments of the invention, the locking/unlocking means 12 may be actuated either automatically, i.e. by engaging the hook 15 with the crosspiece 11 or manually, by acting upon the button. However, the locking/unlocking means are only released by acting upon the command member 16, to prevent any inadvertent release thereof as the vehicle is running or, even worse, in case of accident.

## Claims

1. A base (1) for a child car seat, comprising:
- a main body (2) configured to receive a seating portion and a backrest of a child car seat;
- a pair of slots (4) each located on a respective side (2a) of said main body (2), said slots (4) defining a receptacle (5) therebetween for a seat belt (6) of a vehicle;
- at least one abutment surface (7) located between said slots (4) at said receptacle (5) and configured to create friction with said belt (6) when said belt (6) is placed in an interfering condition therewith;
- tensioning means (8) integrated in said main body (2) and configured to push said belt (2) against said abutment surface (7), said tensioning means (8) comprising a pair of bars (9), each bar (9) having first (9a) and second (9b) ends, said first end (9a) being connected to said main body (2) at a respective hinge (10);
**characterized in that**
- said tensioning means (8) are adapted to be switched between an idle configuration in which said belt (6) is insertable between said slots (4) and slidable in said receptacle (5) on said abutment surface (7) and a locked configuration in which said belt (6) interferes with said abutment surface (7) to be locked in said receptacle (5);
- said bars (9) are configured to be disposed transverse to said belt (6) and to make an interference fit with said belt (6) when said tensioning means (8) are in the locked configuration, each bar (9) being pivotable relative to said hinge (10) between a distal position in which said second end (9b) is spaced apart from said main body (2), and a proximal position in which said second end (9b) is located proximate to said main body (2).

2. A base (1) as claimed in the preceding claim, **characterized in that** each slot (4) is defined by a closed loop.

3. A base (1) as claimed in any of the preceding claims, **characterized in that** said main body (2) comprises a horizontal portion (2c) configured to support a seating portion of a seat, said slots (4) being disposed on said horizontal portion (2c).

4. A base (1) as claimed in any of the preceding claims, **characterized in that** said tensioning means (8) are in the idle configuration when said bars (9) are both in the distal position, and are in the locked configuration when said bars (9) are both locked in the proximal position.

5. A base (1) as claimed in any of the preceding claims, **characterized in that** it comprises locking/unlocking means (12) active on said second ends (9b) when said bars (9) are in the proximal position to lock said second ends (9b) in the proximal position.

6. A base (1) as claimed in the preceding claim, **characterized in that** said locking/unlocking means (12) comprise an engagement member (14) which is configured to make an interference fit with said second ends (9b) when said bars (9) are in the proximal position and to lock said bars (9) in the proximal position.

7. A base (1) as claimed in the preceding claim, **characterized in that** it said locking/unlocking means (12) comprise a command member (16), preferably a button (17) associated with said engagement member (14) and configured to be actuated by a user to release said second ends (9b) of said bars (9) from said engagement member (14).

8. A seat comprising a base (1) as claimed in any of the preceding claims, and a seating portion that is adapted to be fixed to said base (1).

## Patentansprüche

1. Basis (1) für einen Autokindersitz, die Folgendes umfasst:
- einen Hauptkörper (2), der dazu ausgelegt ist, einen Sitzabschnitt und eine Rückenlehne eines Autokindersitzes aufzunehmen;
- ein Paar von Schlitzen (4), die sich auf einer jeweiligen Seite (2a) des Hauptkörpers (2) befinden, wobei die Schlitze (4) dazwischen eine Aufnahme (5) für einen Sitzgurt (6) eines Fahrzeugs definieren;
- mindestens eine Anschlagfläche (7), die sich zwischen den Schlitzen (4) an der Aufnahme (5) befinden und dazu ausgelegt sind, Reibung mit dem Gurt (6) zu erzeugen, wenn der Gurt (6) damit in einen Eingriffszustand gebracht wird;
- ein Spannmittel (8), das in den Hauptkörper (2) integriert und dazu ausgelegt ist, den Gurt (2) gegen die Anschlagfläche (7) zu drücken, wobei das Spannmittel (8) ein Paar Stangen (9) umfasst, wobei jede Stange (9) ein erstes (9a) und ein zweites (9b) Ende umfasst, wobei das erste Ende (9a) an einem jeweiligen Scharnier (10) mit dem Hauptkörper (2) verbunden ist;
**dadurch gekennzeichnet, dass**
- das Spannmittel (8) angepasst ist, zwischen einer Ruheauslegung, in der der Gurt (6) zwischen die Schlitze (4) einsteckbar und in der Aufnahme (5) auf der Anschlagfläche (7) gleitbar ist, und einer verriegelten Auslegung, in der der Gurt (6) in die Anschlagfläche (7) eingreift, um in der Aufnahme (5) verriegelt zu sein, umgestellt zu werden;
- die Stangen (9) dazu ausgelegt sind, quer zum Gurt (6) angeordnet zu sein und mit dem Gurt (6) eine Presspassung herzustellen, wenn sich das Spannmittel (8) in der verriegelten Auslegung befindet, wobei jede Stange (9) relativ zum Scharnier (10) zwischen einer distalen Position, in der das zweite Ende (9b) vom Hauptkörper (2) beabstandet ist, und einer proximalen Position, in der sich das zweite Ende (9b) in der Nähe des Hauptkörpers (2) befindet, schwenkbar ist.

2. Basis (1) nach dem vorhergehenden Anspruch, **dadurch gekennzeichnet, dass** jeder Schlitz (4) durch eine geschlossene Schleife definiert ist.

3. Basis (1) nach einem der vorhergehenden Ansprüche, **dadurch gekennzeichnet, dass** der Hauptkörper (2) einen horizontalen Abschnitt (2c) umfasst, der dazu ausgelegt ist, einen Sitzabschnitt eines Sitzes zu stützen, wobei die Schlitze (4) auf dem horizontalen Abschnitt (2c) angeordnet sind.

4. Basis (1) nach einem der vorhergehenden Ansprüche, **dadurch gekennzeichnet, dass** sich das Spannmittel (8) in der Ruheauslegung befindet, wenn sich beide Stangen (9) in der distalen Position befinden, und in der verriegelten Auslegung befinden, wenn beide Stangen (9) in der proximalen Position verriegelt sind.

5. Basis (1) nach einem der vorhergehenden Ansprüche, **dadurch gekennzeichnet, dass** sie ein Verriegelungs-/Entriegelungsmittel (12) umfasst, das an den zweiten Enden (9b) aktiv ist, wenn sich die Stangen (9) in der proximalen Position befinden, um die zweiten Enden (9b) in der proximalen Position zu verriegeln.

6. Basis (1) nach einem der vorhergehenden Ansprüche, **dadurch gekennzeichnet, dass** das Verriegelungs-/Entriegelungsmittel (12) ein Einrückelement (14) umfasst, das dazu ausgelegt ist, mit den zweiten Enden (9b) eine Presspassung herzustellen, wenn sich die Stangen (9) in der proximalen Position befinden, und die Stangen (9) in der proximalen Position zu verriegeln.

7. Basis (1) nach einem der vorhergehenden Ansprüche, **dadurch gekennzeichnet, dass** das Verriegelungs-/Entriegelungsmittel (12) ein Befehlselement (16) umfasst, vorzugsweise eine Taste (17), die mit dem Einrückelement (14) verknüpft und dazu ausgelegt ist, von einem Benutzer betätigt zu werden, um die zweiten Enden (9b) der Stangen (9) aus dem Einrückelement (14) zu lösen.

8. Sitz, der eine Basis (1) nach einem der vorhergehenden Ansprüche und einen Sitzabschnitt, der angepasst ist, an der Basis (1) befestigt zu sein, umfasst.

## Revendications

1. Base (1) pour un siège auto pour enfant, comprenant :
- un corps principal (2) configuré pour recevoir une partie d'assise et un dossier d'un siège auto pour enfant ;
- une paire de fentes (4) situées chacune sur un côté respectif (2a) dudit corps principal (2), lesdites fentes (4) définissant un réceptacle (5) entre elles pour une ceinture de sécurité (6) d'un véhicule ;
- au moins une surface de butée (7) située entre lesdites fentes (4) au niveau dudit réceptacle (5) et configurée pour créer un frottement avec ladite ceinture (6) lorsque ladite ceinture (6) est placée dans un état d'interférence avec celle-ci ;
- des moyens de tension (8) intégrés dans ledit corps principal (2) et configurés pour pousser ladite ceinture (2) contre ladite surface de butée (7), lesdits moyens de tension (8) comprenant une paire de barres (9), chaque barre (9) ayant des première (9a) et seconde (9b) extrémités, ladite première extrémité (9a) étant reliée audit corps principal (2) au niveau d'une charnière respective (10) ;
**caractérisée en ce que**
- lesdits moyens de tension (8) sont adaptés pour être commutés entre une configuration inactive dans laquelle ladite ceinture (6) peut être insérée entre lesdites fentes (4) et peut coulisser dans ledit réceptacle (5) sur ladite surface de butée (7) et une configuration verrouillée dans laquelle ladite ceinture (6) interfère avec ladite surface de butée (7) pour être verrouillée dans ledit réceptacle (5) ;
- lesdites barres (9) sont configurées pour être disposées transversalement à ladite ceinture (6) et pour réaliser un ajustement serré avec ladite ceinture (6) lorsque lesdits moyens de tension (8) sont dans la configuration verrouillée, chaque barre (9) pouvant pivoter par rapport à ladite charnière (10) entre une position distale dans laquelle ladite seconde extrémité (9b) est espacée dudit corps principal (2), et une position proximale dans laquelle ladite seconde extrémité (9b) est située à proximité dudit corps principal (2).

2. Base (1) selon la revendication précédente, **caractérisée en ce que** chaque fente (4) est définie par une boucle fermée.

3. Base (1) selon l'une quelconque des revendications précédentes, **caractérisée en ce que** ledit corps principal (2) comprend une partie horizontale (2c) configurée pour supporter une partie d'assise d'un siège, lesdites fentes (4) étant disposées sur ladite partie horizontale (2c).

4. Base (1) selon l'une quelconque des revendications précédentes, **caractérisée en ce que** lesdits moyens de tension (8) sont dans la configuration inactive lorsque lesdites barres (9) sont toutes les deux dans la position distale, et sont dans la configuration verrouillée lorsque lesdites barres (9) sont toutes les deux verrouillées dans la position proximale.

5. Base (1) selon l'une quelconque des revendications précédentes, **caractérisée en ce qu'**elle comprend des moyens de verrouillage/déverrouillage (12) actifs sur lesdites secondes extrémités (9b) lorsque lesdites barres (9) sont dans la position proximale pour verrouiller lesdites secondes extrémités (9b) dans la position proximale.

6. Base (1) selon la revendication précédente, **caractérisée en ce que** lesdits moyens de verrouillage/déverrouillage (12) comprennent un élément d'engagement (14) qui est configuré pour réaliser un ajustement serré avec lesdites secondes extrémités (9b) lorsque lesdites barres (9) sont dans la position proximale et pour verrouiller lesdites barres (9) dans la position proximale.

7. Base (1) selon la revendication précédente, **caractérisée en ce que** lesdits moyens de verrouillage/déverrouillage (12) comprennent un élément de commande (16), de préférence un bouton (17) associé audit élément d'engagement (14) et configuré pour être actionné par un utilisateur pour libérer lesdites secondes extrémités (9b) desdites barres (9) dudit élément d'engagement (14).

8. Siège comprenant une base (1) selon l'une quelconque des revendications précédentes, et une partie d'assise qui est adaptée pour être fixée à ladite base (1).
